# EUROPEAN PATENT APPLICATION

(11) **EP 1 621 072 A1**
(43) Date of publication of application: **01.02.2006**
(21) Application number: 04425570.1
(22) Date of filing: 29.07.2004
(51) Int. Cl.: A01G 27/00, A01G 29/00

(54) **Reservoir for irrigation by water dispersion**

(71) Applicant: Fregnani, Mara, 40026 Imola (Bologna) (IT)
(72) Inventor: Fregnani, Mara, 40026 Imola (Bologna) (IT)
(74) Representative: Modiano, Micaela Nadia

(57) **Abstract**

A reservoir for irrigation by water dispersion, comprising at least one chamber (2) for collecting irrigation water, whose capacity is adjustable at the user's discretion from a minimum-capacity configuration to a maximum-capacity configuration, is adapted to be buried substantially proximate to the roots (3) of the plants (4) to be irrigated, and forms at least one opening (6) for filling and topping up with water, which is adapted to protrude above the soil, and at least one selectively permeable dispersion surface (7) for localized release of water, such that it is substantially confined to the area affected by the roots (3) of the plants (4) to be irrigated.

## Description

The present invention relates to a reservoir for irrigation by water dispersion.

It is known that in order to obviate the problem of excessive dispersion of water during the irrigation of plants, flowers and trees, tank-like devices have been devised which are designed to be buried substantially proximate to the roots of the plants to be watered and are provided with lower openings from which the water is gradually dispersed so as to remain in the vicinity of said roots.

This water dispersion occurs for example by evaporation, by accumulation in the form of pools in surface regions of the soil, and by unintentional watering of other plant species (for example the grass surrounding a tree).

However, said tank are currently still rather disadvantageous and difficult to use for reasons described hereinafter. First of all, it is known that each plant species must be watered, day by day, with the correct amount of water, which of course also depends on its size. This forces the grower to have, therefore, a suitable number of tanks, all having different capacities, each designed to be used for a respective type of plant.

Secondly, different plant species have roots that reach different depths in the soil: this means that a same tank often has to be buried at different levels depending on the type of plant to be watered, with the risk of not being able to top it up subsequently except with obvious inconvenience, i.e., by removing part of the soil each time.

The aim of the present invention is to obviate the above-cited drawbacks, by providing a reservoir for irrigation by water dispersion that allows absolutely universal and versatile use, i.e., can be used to water the roots of any plant species.

Within this aim, an object of the present invention is to provide a reservoir for irrigation by water dispersion that can be buried at different depths and at the same time can be topped up rapidly and easily after water dispersion.

Another object of the present invention is to provide a reservoir that is simple, relatively easy to provide in practice, safe in use, effective in operation, and has a relatively low cost.

This aim and these and other objects that will become better apparent hereinafter are achieved by the present reservoir for irrigation by water dispersion, characterized in that it comprises at least one chamber for collecting irrigation water, whose capacity is adjustable at the user's discretion from a minimum-capacity configuration to a maximum-capacity configuration, is suitable to be buried substantially proximate to the roots of the plants to be irrigated, and forms at least one opening for filling and topping up with water, which is suitable to protrude above the soil, and at least one selectively permeable dispersion surface for localized release of water, such that it is substantially confined to the area affected by the roots of the plants to be irrigated.

Advantageously, said chamber forms at least one neck whose length is adjustable at the user's discretion from a minimum-length configuration to a maximum-length configuration, said configurations allowing respectively to arrange said chamber at the minimum and maximum depth in the soil, said neck forming said opening for filling and topping up with water.

Further characteristics and advantages of the present invention will become better apparent from the following detailed description of a preferred but not exclusive embodiment of a reservoir for irrigation by water dispersion according to the invention, illustrated by way of non-limiting example in the accompanying drawings, wherein:
Figure 1 is a side elevation view of a first embodiment of the reservoir according to the invention, with the water collection chamber and the neck in the minimum-capacity and minimum-length configurations, respectively;
Figure 2 is a side elevation view of said reservoir, with the water collection chamber in the minimum-capacity configuration and the neck in the maximum-length configuration;
Figure 3 is a side elevation view of the reservoir, with the collection chamber in the maximum-capacity configuration and the neck in the maximum-length configuration;
Figure 4 is a side elevation view of a second embodiment of the reservoir according to the invention;
Figure 5 is a schematic view of a series installation of a plurality of reservoirs.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 generally designates a reservoir for irrigation by water dispersion according to a first embodiment of the invention.

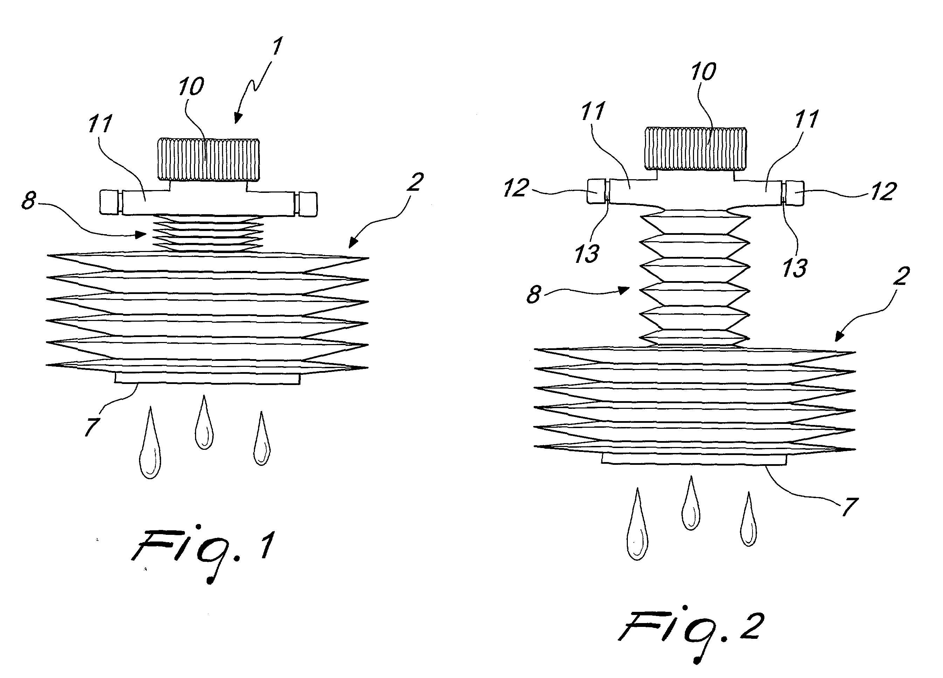

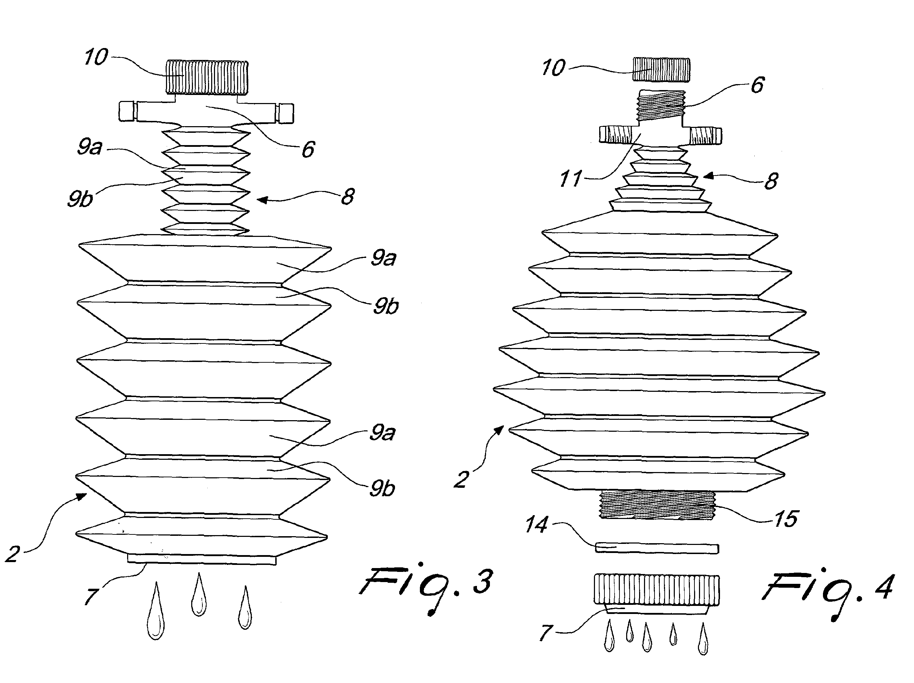

The irrigation reservoir according to the invention comprises at least one chamber, generally designated by the reference numeral 2, for collecting irrigation water, whose capacity is advantageously adjustable at the user's discretion from a minimum-capacity configuration (Figures 1 and 2) to a maximum-capacity configuration (Figure 3); this allows to use a same reservoir to irrigate plant species that require different amounts of water.

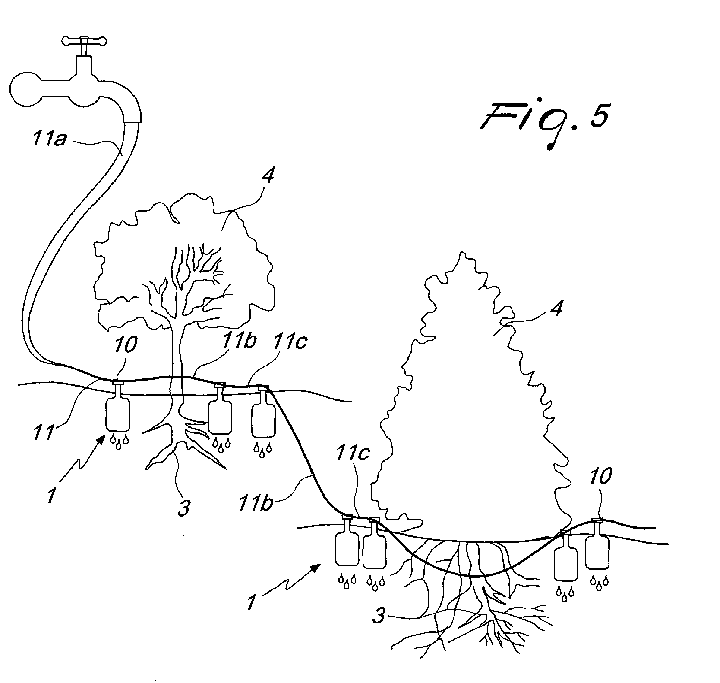

The water collection chamber 2 is conveniently suitable to be buried substantially proximate to roots 3 of plants 4 to be irrigated, as shown in Figure 5, and forms, in an upper region, at least one opening 6 for filling and topping up the dispersed water, which is suitable to protrude above the ground; the chamber 2 further forms, in a lower region, at least one selectively permeable dispersion surface 7 for localized release of water, so that said release is substantially confined to the area affected by the roots 3 of the plants 4 to be irrigated.

Conveniently, the water collection chamber 2 forms a neck, generally designated by the reference numeral 8, whose length is adjustable continuously at the user's discretion from a minimum-length configuration (Figure 1) to a maximum-length configuration (Figure 2): these configurations allow respectively to arrange the water collection chamber 2 at the minimum or maximum depth in the soil, so that it is possible to reach roots of different lengths with a same reservoir. The neck 8 forms, in an upper region, the opening 6 for topping up the water dispersed by watering the roots.

Conveniently, the adjustable-capacity chamber 2 of the reservoir according to the invention has substantially concertina-like walls: in this way, it can be extended elastically by hand with substantial continuity from the minimum-capacity configuration (Figure 1) to the maximum-capacity configuration (Figure 3). The water collection chamber 2 is preferably substantially cylindrical, but in an equivalent manner it can assume other configurations depending on requirements of the application.

Likewise, and advantageously, the neck 8 has substantially concertina-like walls, so that it can be equally elastically extensible, by hand and with substantial continuity, from the minimum-length configuration (Figure 1) to the maximum-length configuration (Figure 2).

The substantially concertina-like walls of the water collection chamber 2 and of the neck 8 are constituted by pluralities of substantially frustum-shaped elements 9a and 9b, which are rigidly coupled to each other at the edges and alternately converge and diverge. This is particularly advantageous, since it is possible, once the reservoir has been buried, to compact the soil at the joining points of the frustum-shaped elements 9a and 9b so as to block the chamber 2 and the neck 8 in the intended configurations, i.e., with a predefined capacity of the chamber 2 and a predefined length of the neck 8: this prevents them from spontaneously assuming, by elastic recoil, the minimum-capacity and minimum-length configuration respectively.

Conveniently, the filling and top-up opening 6, which when the chamber 2 is buried protrudes substantially above the ground to allow the introduction of water, is provided with a respective closure plug 10, for example of the screw type or also of the push-fit type.

Conveniently, the neck 8 forms in the upper part, i.e., at the filling and top-up opening 6, at least one connector 11, which is suitable to be connected to a water supply duct 11a, as shown in Figure 5, thus providing remote filling of the collection chamber 2.

Preferably, the connector 11 comprises, at its free end, a closed tip portion 12 formed by an annular groove 13: the tip portion 12 can be simply removed for example by means of ordinary scissors, especially in the preferred case in which the reservoir is made of a synthetic material such as plastics, a material which is lightweight, inexpensive and easy to mold. This solution allows the grower to top up the reservoir in place (i.e., from the plug 10) and to top it up remotely, from the connector 11, after removing the tip portion 12.

Conveniently, the neck 8 forms, as an alternative, two mutually opposite connectors 11, which are suitable for connection to respective water supply ducts 11b, 11 c, so as to provide the remote filling of a plurality of reservoirs connected in series, as shown in Figure 5.

The dispersion surface 7 is, according to the invention, advantageously constituted by a porous partition, which is rigidly coupled to the chamber 2 and is sized and conceived so as to disperse preset amounts of water per unit time, also taking into account the type of soil (for example sandy, clayey soil) in which the reservoir is buried; as an alternative, the dispersion surface 7 can be constituted by a partition that is affected by a (more or less dense) distribution of perforations or also by a semipermeable membrane made of suitable material.

The method of use of the reservoir according to the invention is as follows. It is necessary, first of all, to dig a containment seat in the soil proximate to the plant to be irrigated: said seat must have an appropriate depth according to the capacity that the chamber 2 of the reservoir will have to assume and according to the depth at which the water dispersion surface 7 will have to be arranged. One might thus dig, for example, a rather shallow seat to use the reservoir with its minimum capacity or for short roots 3, or, as an alternative, a deep seat to use the reservoir at its maximum capacity or to reach long roots 3.

The reservoir is then lowered into the seat, extending elastically the chamber 2 or the neck 8 according to the watering requirements of the plant 4 (i.e., according to the capacity to be provided or to the depth at which the dispersion surface 7 is to be arranged); then the soil is compacted at the joining edges of the frustum-shaped elements 9a and 9b, so that they retain the established configuration. Once the soil has been fully compacted around the reservoir, one must ensure that the filling and top-up opening 6, with the associated plug 10, protrudes above the ground, so that the grower can access it easily in order to pour water into the chamber 2.

It has thus been shown that the invention has achieved the intended aim and objects. The reservoir according to the invention allows to eliminate substantially the dispersion of water produced by evaporation and unintentional irrigation of surrounding plants; it is very useful, for example, in the cultivation of sloping ground, and eliminates the problem of water stagnation on the surface, making the ground more accessible. By having a single reservoir, which moreover is very compact when it is not buried, it is possible to perform localized irrigation of different plant species requiring different amounts of water and having roots of different lengths.

The invention thus conceived is susceptible of numerous modifications and variations, all of which are within the scope of the appended claims.

A second embodiment of the reservoir according to the invention is shown in Figure 4, and advantageously associates the dispersion surface 7 with a filter 14 that is suitable to filter the water to be dispersed and to prevent foreign objects from entering the chamber 2 (which in this embodiment is substantially oval, by way of example, so as to increase capacity).

The dispersion surface 7 is conveniently removable, so that it can be cleaned easily on both sides. It is shaped substantially like a plug with an internal thread suitable for screwing along a threaded tang 15 that protrudes downward from the chamber 2, with which it is connected. The filter 14 is interposed between the plug-like dispersion surface 7 and the tang 15. The connectors 11 can also be provided open and threaded externally (Figure 4).

All the details may be replaced with other technically equivalent ones.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reservoir for irrigation by water dispersion, **characterized in that** it comprises at least one chamber (2) for collecting irrigation water, whose capacity is adjustable at the user's discretion from a minimum-capacity configuration to a maximum-capacity configuration, is adapted to be buried substantially proximate to the roots of the plants to be irrigated, and forms at least one opening (6) for filling and topping up with water, which is adapted to protrude above the soil, and at least one selectively permeable dispersion surface (7) for localized release of water, such that it is substantially confined to the area affected by the roots of the plants to be irrigated.

2. The reservoir according to claim 1, **characterized in that** said chamber (2) forms at least one neck (8) whose length is adjustable at the user's discretion from a minimum-length configuration to a maximum-length configuration, said configurations allowing respectively to arrange said chamber (2) at the minimum or maximum depth in the ground, said neck (8) forming, in an upper region, said opening (6) for filling and topping up with water.

3. The reservoir according to claims 1 and 2, **characterized in that** said adjustable-capacity chamber (2) has substantially concertina-like walls, so that it can be extended elastically by hand with substantial continuity from a minimum-capacity configuration to a maximum-capacity configuration.

4. The reservoir according to one or more of the preceding claims, **characterized in that** said adjustable-length neck (8) has substantially concertina-like walls, so that it can be extended elastically by hand with substantial continuity from a minimum-length configuration to a maximum-length configuration.

5. The reservoir according to one or more of the preceding claims, **characterized in that** said substantially concertina-like walls are constituted by pluralities of substantially frustum-shaped elements (9a, 9b), which are mutually coupled at the edges and alternately converge and diverge.

6. The reservoir according to one or more of the preceding claims, **characterized in that** said filling and top-up opening (6) is provided with a respective closure plug (10), which protrudes above the surface of the soil.

7. The reservoir according to one or more of the preceding claims, **characterized in that** said neck (8) forms, at said filling and top-up opening (6), at least one connector (11) that is adapted for connection to a respective water supply duct (11a), so as to provide remote filling of said collection chamber (2).

8. The reservoir according to one or more of the preceding claims, **characterized in that** said neck (8) forms, at said filling and top-up opening (6), at least one pair of connectors (11) adapted for connection to respective water supply ducts (11b, 11c), so as to provide remote filling of a plurality of reservoirs connected in series.

9. The reservoir according to one or more of the preceding claims, **characterized in that** said dispersion surface (7) is constituted by a porous partition.

10. The reservoir according to one or more of the preceding claims, **characterized in that** said dispersion surface (7) is constituted by a partition affected by a distribution of perforations.

11. The reservoir according to one or more of the preceding claims, **characterized in that** said dispersion surface (7) is constituted by a semipermeable membrane.

12. The reservoir according to one or more of the preceding claims, **characterized in that** it comprises a filter (15) that is associated with said dispersion surface (7).

13. The reservoir according to one or more of the preceding claims, **characterized in that** said dispersion surface (7) is rendered detachable, so that it can be cleaned on both sides.

14. The reservoir according to one or more of the preceding claims, **characterized in that** said water collection chamber (2) is substantially cylindrical.

15. The reservoir according to one or more of the preceding claims, **characterized in that** said water collection chamber (2) is substantially oval.
